# EUROPEAN PATENT APPLICATION

(11) **EP 1 953 006 A1**
(43) Date of publication of application: **06.08.2008**
(21) Application number: 06833251.9
(22) Date of filing: 24.11.2006
(51) Int. Cl.: B60B 9/12, B60B 3/04

(54) **ELASTIC WHEEL**

(30) Priority: 25.11.2005 JP 2005340726; 25.11.2005 JP 2005340728
(71) Applicant: SUMITOMO RUBBER INDUSTRIES, LTD., Kobe-shi, Hyogo 651-0072 (JP); Topy Industries, Ltd, Tokyo 1028448 (JP)
(72) Inventor: SAKAKI, Toshiaki, Kobe-shi Hyogo 651-0071 (JP); IMOTO, Youji, Kobe-shi Hyogo 651-0071 (JP); IMAMURA, Tadashi, Tokyo 102-8448 (JP)
(74) Representative: Manitz, Finsterwald & Partner GbR
(86) International application number: PCT/JP2006/323447
(87) International publication number: WO 2007/061049

(57) **Abstract**

An elastic wheel comprises a circumferentially extending rim for supporting a tire, a disk fixed to an axle, a damper member disposed between the rim and the disk and made of elastic material for absorbing vibration, and a protecting member made of elastic material and covering the damper member.

## Description

### BACKGROUND OF THE INVENTION

### Field of the Invention

The present invention relates to an elastic wheel capable of enhancing its durability.

### Description of the Related Art

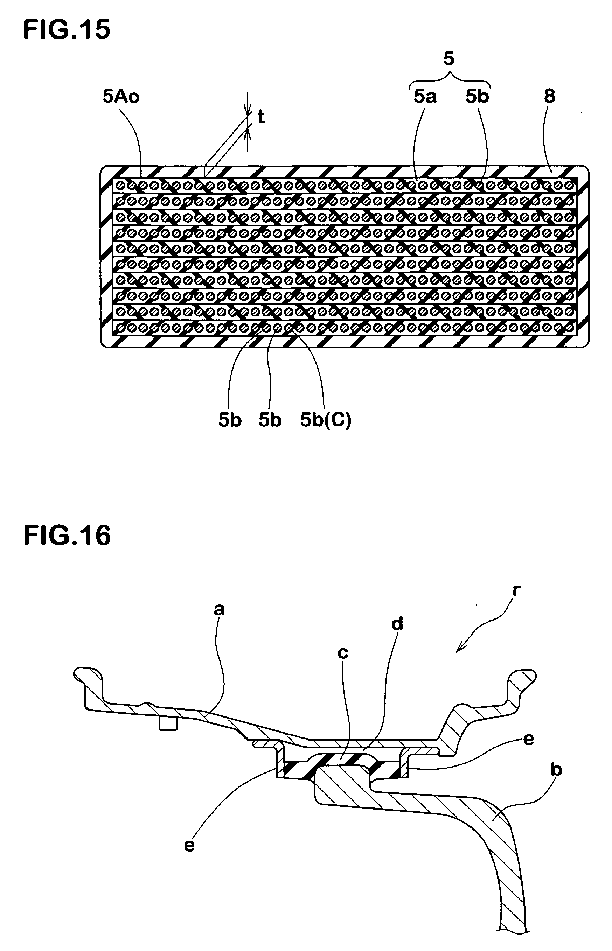

Fig. 16 is a sectional view of a conventional elastic wheel r. The elastic wheel r includes a circumferentially extending rim "a" for supporting a tire, a disk b fixed to an axle, and a damper member c made of elastic rubber for connecting the rim "a" and the disk b (see Japanese Patent Publication No. 2005-96642 for more details). According to such an elastic wheel r, since vibration of the rim generated during running is absorbed by the damper member c, vibration transmitting amount to the disk b and the axle (not shown) is reduced. Therefore, riding comfort in the passenger room and noise reduction performance are enhanced.

According to the conventional elastic wheel r, since the damper member c is exposed outside, there is an adverse possibility that a foreign matter comes into contact with the damper member c during running and the damper member c is damaged. Further, grease existing around a suspension of a vehicle easily attaches to the damper member c. This causes swelling of the damper member c and its strength is lowered. Furthermore, the damper member c receives heat from a brake system (not shown) and is directly exposed to energy such as ultraviolet rays and ozone. Thus, there is a problem that the damper member c is easily deteriorated and destroyed.

### SUMMARY OF THE INVENTION

The present invention has been accomplished in view of the problem above, it is a main object of the invention to provide an elastic wheel capable of enhancing a durability of the damper member for a long term based on provision of a protecting member for covering the damper member.

The present invention provides an elastic wheel comprising a circumferentially extending rim for supporting a tire, a disk fixed to an axle, a damper member disposed between the rim and the disk and made of elastic material for absorbing vibration, and a protecting member made of elastic material and covering the damper member.

According to the elastic wheel of the invention, the damper member is covered with the protecting member made of elastic material. Therefore, it is possible to prevent foreign matter from coming into contact with the damper member and to prevent grease from attaching to the damper member during running of a vehicle. Further, the damper member does not directly receive heat from a brake system and ultraviolet rays or the like. Thus, a performance of the damper member is maintained for a long term and durability of the elastic wheel is enhanced.

### BRIEF DESCRIPTION OF THE DRAWINGS

Fig. 1 is a sectional view showing one embodiment of an elastic wheel of the present invention;
Fig. 2 is a partial enlarged of Fig. 1;
Fig. 3 is an end view taken along the line A-A in Fig. 2;
Fig. 4 is a partial sectional view showing a temporally assembled state of a damper member;
Fig. 5 is a sectional view showing a state in which a retrofit ring is pressed to compress the damper member;
Fig. 6 is a perspective view of the damper member;
Fig. 7 is a schematic side view for describing a molding method of the damper member;
Fig. 8 is a sectional view when the damper member is molded;
Fig. 9 is a partial perspective view of a damper member according to another embodiment;
Fig. 10 is a partial protecting member view of an elastic wheel according to another embodiment of the damper member;
Fig. 11 is a partial sectional view of the elastic wheel for describing a disposing method of a protecting member;
Fig. 12 is a partial sectional view of the elastic wheel for describing the disposing method of the protecting member;
Fig. 13 is a partial sectional view of the elastic wheel for showing another embodiment;
Fig. 14 is a sectional view of an elastic wheel for showing another embodiment;
Fig. 15 is a sectional view of an elastic wheel for showing another embodiment; and
Fig. 16 is a sectional view of an elastic wheel for describing a conventional art.

### DETAILED DESCRIPTION OF THE PREFERRED EMBODIMENTS

One embodiment of the present invention will be described based on the drawings. An elastic wheel 1 of the present embodiment comprises a circumferentially extending rim 3 for supporting a pneumatic tire (simply, tire in some cases) 2, a disk 4 fixed to an axle (not shown), and a damper member 5 made of elastic material which is disposed between the rim 3 and the disk 4 to absorb vibration.

The tire 2 is a toroidal radial tire for a passenger vehicle having a pair of bead portions 2a which are mounted on the rim 3.

The rim 3 comprises a pair of rim seats 3a on which the bead portions 2a are mounted, and a pair of flanges 3b connected to the outer ends of the rim seats 3a in a rotation axial direction (simply, axial direction, hereinafter). The flanges 3b extend outward in a radial direction of the rim (simply, radial direction, hereinafter). The rim 3 has a recessed well portion 3c and a barrel portion 3d arranged side by side between the rim seats 3a. The well portion 3c has the smallest outer diameter, and the barrel portion 3d has an outer diameter greater than that of the well portion 3c and smaller than that of the rim seat 3a. The well portion 3c is close to one of the rim seats 3a and 3a, but the well portion 3c may be located at a center between the rim seats 3a, and its shape and/or location is not especially limited. The barrel portion 3d has a width greater than that of the well portion 3c in the axial direction.

The rim 3 is a substantially cylindrical annular body in which the above-described constituent members are substantially continuously extended in the circumferential direction around a rotation axis thereof. To secure sufficient strength, it is preferable that the rim 3 is made of non-extendible metal material such as steel, aluminum alloy and magnesium alloy.

The disk 4 of the present embodiment is offset outward of the vehicle, and is fixed to the axle (or axle hub) (not shown). The disk 4 may appropriately be curved as shown in the drawing to enhance its rigidity. The disk 4 may be provided with an opening 4a for reducing the weight and for radiating heat. To secure sufficient strength, it is preferable that the disk 4 is made of non-extendible metal material such as steel, aluminum alloy and magnesium alloy like the rim 2.

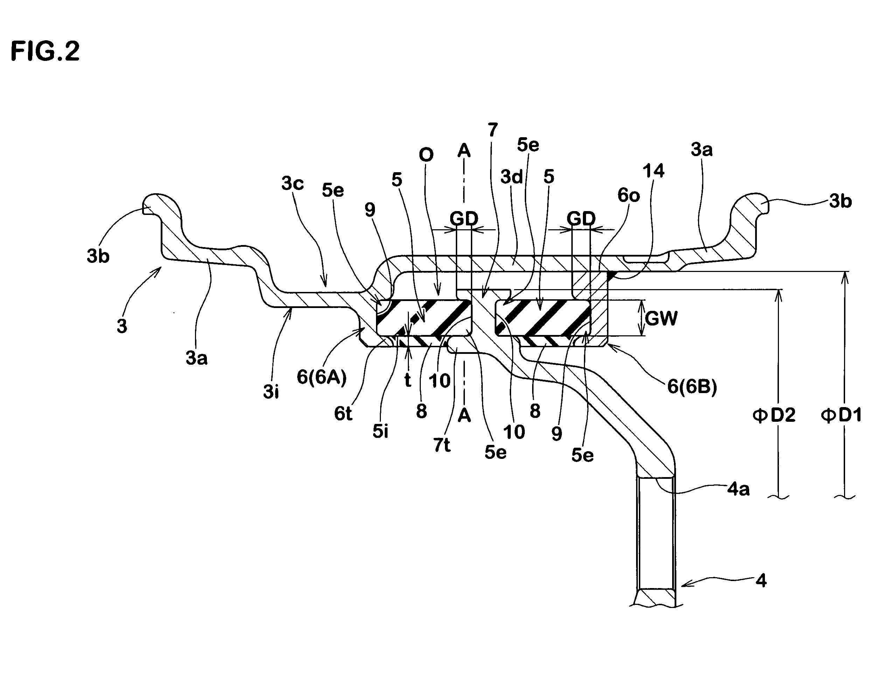

As shown in Fig. 2, the rim 3 is provided with a pair of first ring pieces 6 projecting from a radially inner peripheral surface 3i of the rim 3. These first ring pieces are separated in an axle direction of the rim 3 and extend annularly in the circumferential direction of the rim 3. Here, the inner peripheral surface 3i of the rim 3 is a surface of the rim 3 opposite from a surface on which the tire 2 is mounted. In this embodiment, the first ring piece 6 is formed into an internal flange continuously extending in the circumferential direction. With this, the rim 3 is formed with a groove-like gap O which is defined by the opposed two first ring pieces 6 and the inner peripheral surface 3i of the rim 3 therebetween. The groove-like gap O extends continuously in the circumferential direction.

A first engaging groove 9 extending in the circumferential direction is formed in axially inner side surfaces of each first ring piece 6. In this embodiment, the first engaging grooves 9 extend in the circumferential direction of the rim 3, and have the same diameters, the same groove widths GW and the same groove depths GD. In the present embodiment, the first engaging groove 9 extends continuously in the circumferential direction.

Further, the first ring pieces 6 comprise a pre-fixed ring piece 6A which is previously integrally formed on the inner peripheral surface 3i of the rim 3, and a post-fixed ring piece 6B which is fixed to the inner peripheral surface 3i by fixing means such as welding or screw device at a later stage.

The pre-fixed ring piece 6A is provided on a side of the well portion 3 in the axial direction. The forming method of the pre-fixed ring piece 6A is not especially limited, but it is preferable that the pre-fixed ring piece 6A is integrally formed on the rim by molding or forging or the like when the rim 3 is formed. If one pre-fixed ring piece 6A is integrally formed on the inner peripheral surface 3i of the rim 3, the productivity of wheel 1 is enhanced.

In this embodiment, the post-fixed ring piece 6B has an radially outer peripheral surface 60 having an outer diameter which is slightly smaller than an inner diameter D1 of the barrel portion 3d of the rim 3. Therefore, before the post-fixed ring piece 6B is fixed to the rim 3, the post-fixed ring piece 6B can move along the barrel portion 3d of the rim 3 in the axle direction, and its position can be adjusted. In the rim 3, an inner diameter of the rim seat 3a is set greater than the outer diameter D1 so that the post-fixed ring piece 6B can be fitted into an inner peripheral surface of the barrel portion 3d from one side of the flange 3b which is further from the well portion 3c.

The disk 4 is provided at its radially outer periphery with a second ring piece 7 which projects radially outward and which extends in the circumferential direction between the first ring pieces 6. Since the second ring piece 7 has an outer diameter D2 smaller than the inner diameter D1 of the inner peripheral surface 3i of the barrel portion 3d, the second ring piece 7 is disposed in the groove-like gap O of the rim 3. The second ring piece 7 is smaller than a width of the gap 0 in the axial direction. With this, a gap formed between the second ring piece 7 and the first ring piece 6 is formed on both sides of the second ring piece 7 in the axial direction.

A pair of second engaging grooves 10 opposed to the first engaging grooves 9 are provided on both side surfaces of the second ring piece 7 in the axial direction. Each second engaging groove 10 extends in the circumferential direction around the rotation axis of the rim 3. In this embodiment, the second engaging groove 10 has the same groove width GW and groove depth GD as those of the first engaging groove 9. The second engaging groove 10 is formed into an annular shape which is continuous in the circumferential direction of the rim 3.

The damper member 5 is disposed in each gap which is formed between the first ring piece 6 and the second ring piece 7. More specifically, axially both ends 5e and 5e of each damper member 5 are inserted into the first engaging groove 9 and the second engaging groove 10 and retained therein. The damper member 5 has a rectangular shape having a laterally long cross section, and when no great load is applied, an intermediate portion of the damper member 5 in its widthwise direction is not in contact with the rim 3 or the disk 4. Therefore, this portion can easily be deformed in accordance with a load.

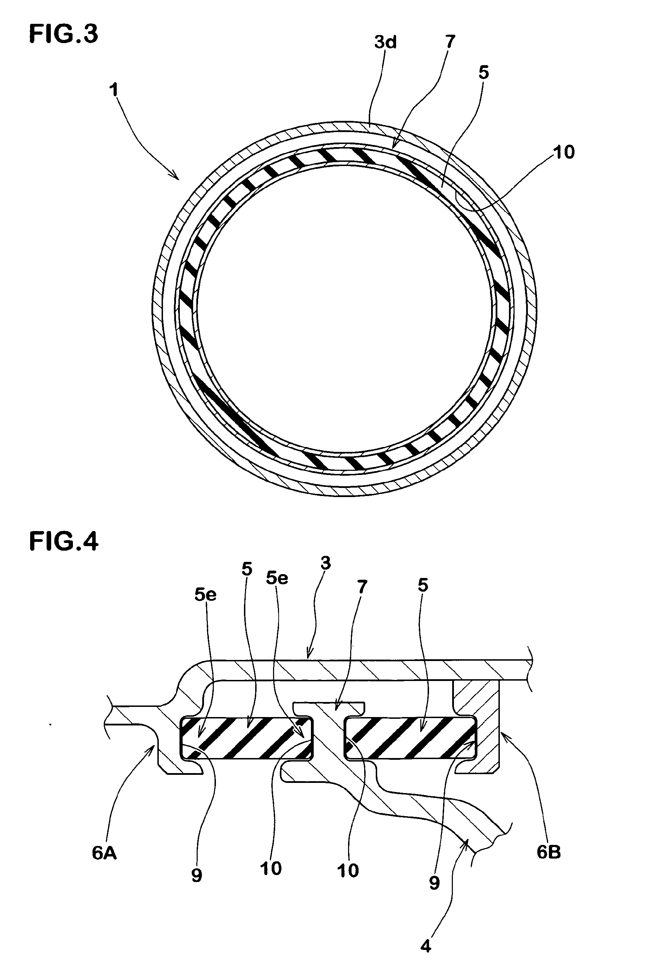

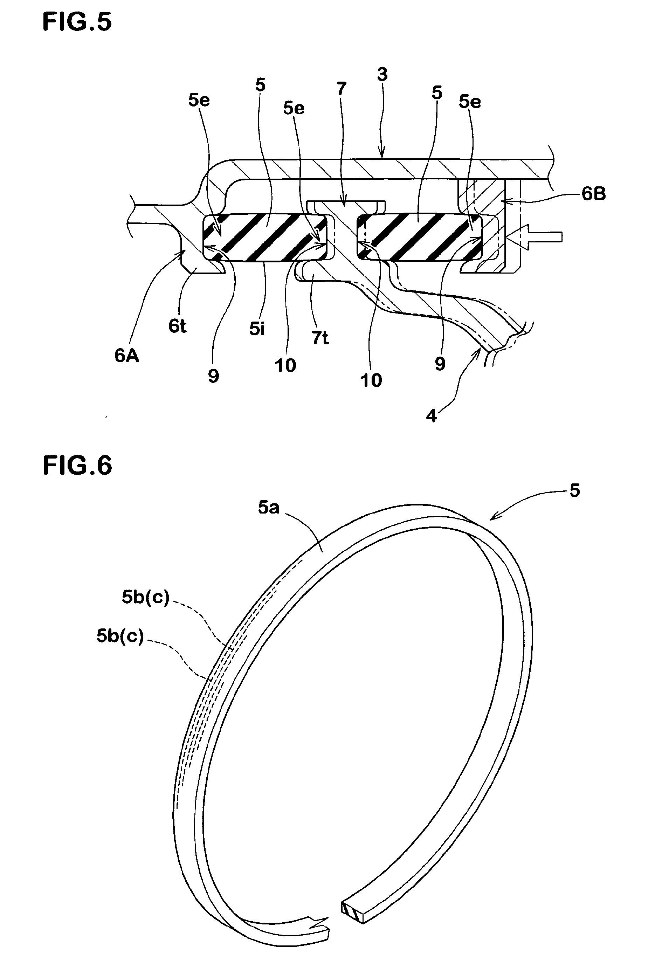

One example of a manufacturing method of such an elastic wheel 1 will be described briefly. First, as shown in Fig. 4, one of the damper members 5, the disk 4, the other damper member 5 and the post-fixed ring piece 6B are sequentially attached and temporality assembled toward the first engaging groove 9 of the pre-fixed ring piece 6A. Then, as shown in Fig. 5, the post-fixed ring piece 6B is pressed toward the pre-fixed ring piece 6A in the axial direction using a press device to compress each damper member 5. The damper members 5 and 5 which are held in their compressed states come into tight contact with groove surfaces of the engaging grooves 9 and 10 under a high pressure. With this, an extremely great friction force is obtained between contact surfaces of the fist and second ring pieces 6 and 7 and the damper members 5. In this state, the post-fixed ring piece 6B is integrally fixed on the inner peripheral surface 3i of the rim 3 by the fixing means such as welding or screw (welding in this present embodiment).

Although it is not especially limited here, if a pressing force for compressing the damper member 5 is too small, a friction force between the damper member 5 and the engaging groove 9 or 10 can not be enhanced sufficiently, and there is a tendency that a coupling force therebetween is deteriorated and slip or the like is prone to be generated and a steering stability is deteriorated. It has been found that the steering stability and the noise reduction performance are enhanced when the pressing force is maintained at a certain level. On the other hand, if the pressing force becomes excessively great, there is a tendency that damage such as crack is generated in the damper member 5, vibration absorbing ability of the damper member 5 is deteriorated and the noise reduction performance is deteriorated. From such a view point, it is preferable that the post-fixed ring piece 6B is pushed toward the pre-fixed ring piece 6A by a force in the axle direction of not less than 10 kN, and more preferably not less than 15 kN, and its upper limit is preferably not more than 30 kN, and more preferably not more than 25 kN.

The damper member 5 which is compressed in this manner can smoothly transmit torque between the rim 3 and the disk 4, and can largely reduce a transmission loss such as slip. According to the elastic wheel 1, it is unnecessary to cure and adhere the damper member 5 to the rim 3 or disk 4. Therefore, the elastic wheel 1 of the present embodiment can be produced by a general wheel producing line, and the productivity is largely enhanced. Adhesive can also be used in combination of course.

In the elastic wheel 1, displacement of the rim 3 with respect to the disk 4 in the radial direction is absorbed by shearing of the damper member 5. This exhibit excellent shock absorption effect against small vibration input within a range of a gap in the radial direction provided between an outer peripheral surface of the second ring piece 7 and the inner peripheral surface 3i of the rim 3, and largely enhance a riding comfort and noise reduction performance in a passenger room. In the elastic wheel 1, with respect to an input of great vibration in the radial direction, the outer peripheral surface of the second ring piece 7 and the inner peripheral surface 3i of the rim 3 which are both made of metal material come into direct contact with each other, great displacement in the radial direction is limited and safe running is secured.

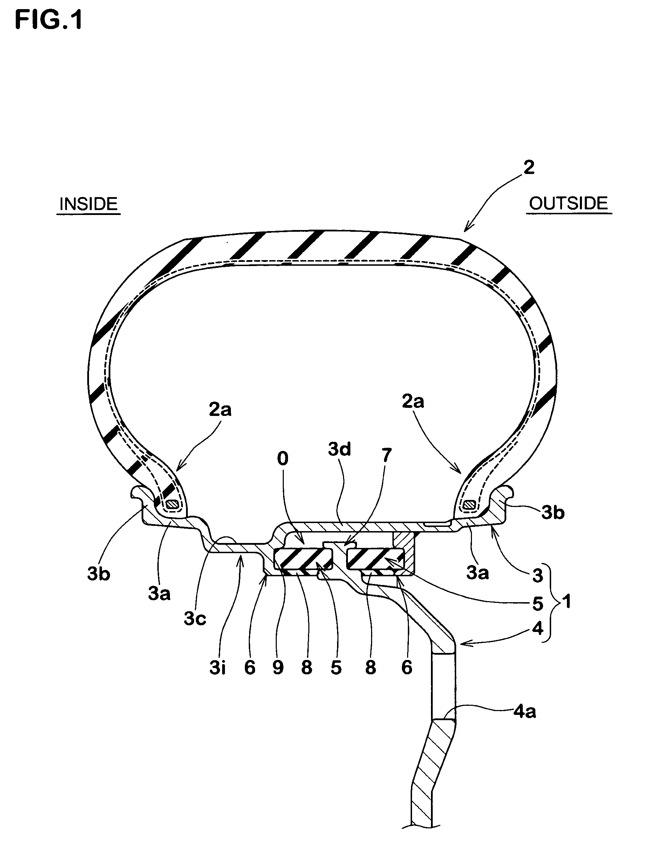

Here, as shown in Fig. 1, the groove depth GD and the groove width GW of the first engaging groove 9 (or second engaging groove 10) are not especially limited, but in order to secure a sufficient contact area with respect to the damper member 5, the groove depth GD is preferably not less than 3 mm, more preferably not less than 5 mm, more preferably not less than 8 mm. If the groove depth GD is excessively deep, the damper member 5 becomes excessively large and thus, the groove depth GD is preferably not more than 15 mm. The groove width GW of the first engaging groove 9 (or second engaging groove 10) along the radial direction is preferably not less than 100% of the groove depth GD, more preferably not less than 150%, and its upper limit is preferably not more than 400% and more preferably not more than 300%.

Elastic material forming the damper member 5 is not especially limited, preferable material is rubber or elastomer to enhance the riding comfort.

The damper member 5 may be made of rubber only, but it is preferable that the damper member 5 is made of fiber-reinforced rubber (FRR) comprising a rubber 5a as matrix and a cord 5b as fiber for reinforcing the rubber 5a. Such fiber-reinforced rubber can exhibit great rigidity without deteriorating a vibration absorption ability of the damper member 5 by a high tensile elastic modulus of the cord 5b. Therefore, it is possible to effectively suppress inconveniences such as delay in steering response of a wheel when a steering wheel is turned which is frequently generated in the conventional elastic wheel, staggering feeling when the steering angel is neutral and damping (mincing vibration) of wheel at the time of low speed driving.

The rubber 5a of the matrix is not especially limited, but it is preferable that the rubber has excellent adhesive with respect to fiber, the rubber does not generate high heat, and has fatigue resistance. Preferable examples of the rubber 5a are natural rubber, styrene butadiene rubber and butadiene rubber. These materials may be used singularly or in combination.

The rubber 5a has rubber composite having a complex elastic modulus E* in a range of from 0.5 to 5.0 MPa, more preferably in a range of from 1.0 to 3.0 MPa in view of absorption effect of vibration. To prevent the rubber from generating heat by repetition of deformation, it is preferable that the rubber composition has loss tangent tan δ in a range of from 0.01 to 0.4, more preferably in a range of from 0.01 to 0.2. The complex elastic modulus E* and the loss tangent tan δ should be measured by a viscoelasticity spectrometer at the temperature of 70 degrees Celsius with initial distortion of 10% and dynamic distortion of ±1.0% and at frequency of 10 Hz.

Materials of the cord 5b are not especially limited, but preferable examples of the material are organic fibers such as nylon, polyester, rayon, vinylon, aromatic polyamide, cotton, cellulose resin and crystalline polybutadiene; and inorganic fibers such as boron, glass fiber and carbon. More especially, organic fiber is preferable because it is light in weight and adhesive with respect to rubber is excellent. Metal fiber can also be used if necessary.

Short fiber and/or long fiber can be employed as the cord 5b, but it is preferable that long fiber obtained by stranding a plurality of filaments is preferable. In the embodiment shown in Fig.6, long fibers c extending continuously in the circumferential direction is shown. The long fibers c have length exceeding one round (inner periphery length) of the damper member 5. Such a damper member 5 has great tensile rigidity in the circumferential direction. Thus, when torque of the disk 4 and the rim 3 is transmitted, shearing distortion of the damper member 5 in the circumferential direction can be reduced. Therefore, response of the wheel 1 at the time of acceleration or deceleration of the vehicle can largely be enhanced. In order to surely exhibit such effect, in one damper member 5, a total mass of the long fibers c is not less than 50% of the mass of the entire fibers, more preferably not less than 60%, and more preferably not less than 70%.

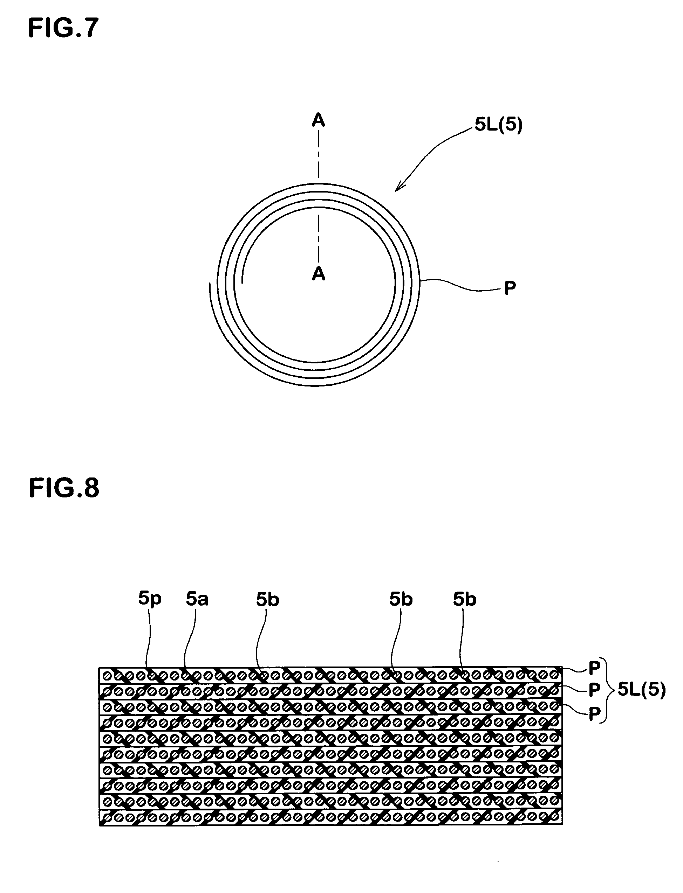

In Fig. 7 and Fig. 8 which is a sectional view taken along the line A-A in Fig. 7, one example of a producing method of the damper member 5 is shown. The damper member 5 of the present embodiment can be formed in such a manner that a ribbon-like cord ply P is continuously spirally wound to form a ply laminated body 5L, and this is cured. As shown in Fig. 8, the cord ply P includes a plurality of cords 5b which are arranged in parallel to each other, and non-cured rubbers 5a covering the cords 5b and is formed into a ribbon shape.

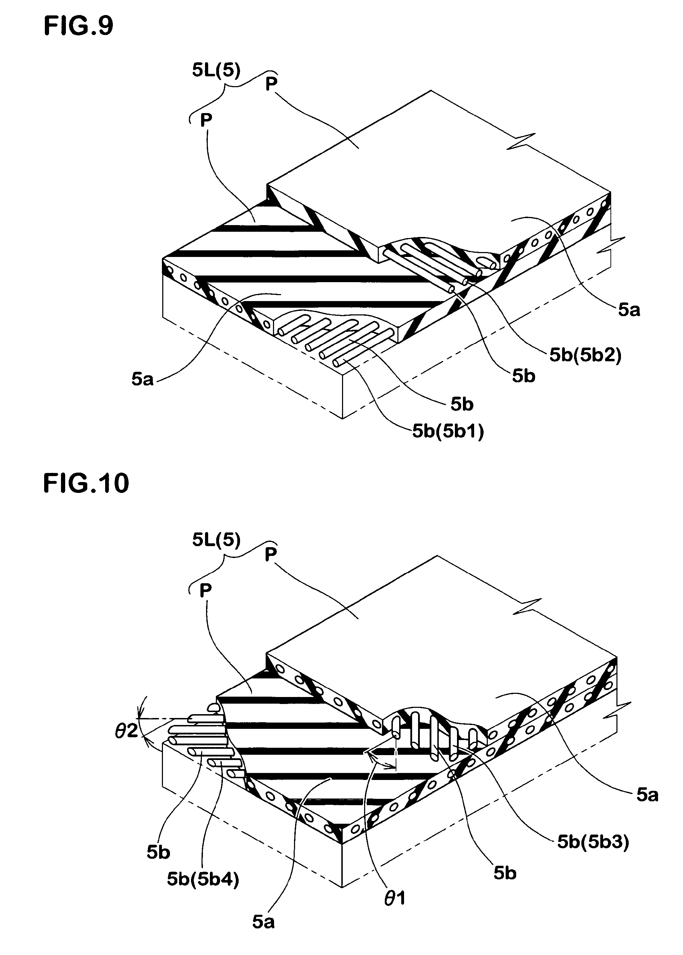

As shown in Fig. 9, the damper member 5 may include a cord 5b1 extending in the circumferential direction, and a cord 5b2 extending in the axial direction. The cords 5b1 and 5b2 intersect with each other at substantially right angles. The cord 5b2 which extends in the axial direction shows great resistance against compression or tensile force in the axial direction of the damper member 5 and thus, lateral rigidity of the damper member 5 is enhanced, and the steering stability is further enhanced. All of the cords 5b of the damper member 5 may be arranged along the axial direction.

As shown in Fig. 10, the damper member 5 may include cords 5b3 and 5b4 which extends obliquely with respect to the circumferential direction. Especially in this example, the damper member 5 includes the cord 5b3 which is inclined with respect to the circumferential direction at an angle θ1 which is greater than 10° and smaller than 50°, and the cord 5b4 which is inclined with respect to the circumferential direction in an opposite direction from the fiber 5b3 at an angle of θ2 which is greater than 10° and smaller than 50°. The cords 5b3 and 5b4 preferably have intersection angle (θ1 + θ2) greater than 0° and smaller than 90°. The damper member 5 having the intersecting cords 5b3 and 5b4 has high rigidity in the circumferential direction of the damper member 5. Therefore, similar to the embodiment shown in Fig. 6, when large torque (twist) is applied to the damper member 5 at the time of driving or braking of a vehicle, a twisting angle of the damper member 5 can be suppressed. With this, response at the time of driving or braking of a vehicle can be enhanced.

Since the rigidity of the damper member 5 in its radial direction is not varied substantially, the vibration absorption properties at the time of running are not deteriorated. Therefore, the excellent riding comfort of the elastic wheel 1 can be maintained as it is. In the above-described embodiments, the cord 5b is used as fiber, the cord 5b may be replaced by short fiber or short fiber may be used in combination. Damper members 5 shown in Figs. 9 and 10 can be formed by alternately winding cord plies P having the cords.

An amount of fiber included in the damper member 5 can variously be changed in accordance with intended performance, but when organic fiber cord is used as in this embodiment, it is preferable that an area occupied by the cord is not less than 45% of the entire area, more preferably not less than 50%, and its upper limit is preferably not less than 90%, and more preferably not more than 80%.

The elastic wheel 1 in accordance with the present embodiment further comprises a protecting member 8 which covers the damper member 5.

The embodiments shown in Figs. 1, 2, 11 and 12 illustrates that the protecting member 8 is disposed in an inner groove-like recess 13 which is surrounded by an radially inner peripheral surface 5i of the damper member 5, a projection 6t of the first ring piece 6 projecting radially inward from the inner peripheral surface 5i, and a projection 7t of the second ring piece 7 located radially inward from the inner peripheral surface 5i. The protecting member 8 is in contact with the inner peripheral surface 5i of the damper member 5 and covers the same, and continuously extends annularly in the circumferential direction.

Therefore, the both ends 5e of the damper member 5 are covered with the engaging grooves 9 and 10, the inner peripheral surface 5i directed to the disk 4 of the damper member 5 is covered with the protecting member 8, and a radially outer peripheral surface 5o of the damper member 5 directed to the rim 3 is covered with the gap O which is substantially closed space. Thus, the damper member 5 is not exposed outside when the vehicle runs, a foreign matter or grease does not come into direct contact with the damper member 5, and the damper member 5 does not directly receives ultraviolet rays or heat.

Further, since the protecting member 8 of the embodiment is in intimate contact with the radially inner surface 5i of the damper member 5, it is possible to block oxygen to the damper member 5 and/or to reduce a transparent amount of oxygen. To enhance an oxygen-blocking ability of the protecting member 8, filler such as mica and/or montmorillonite may be included in the protecting member 8.

The protecting member 8 increases the lifetime of the damper member 5 and enhances the durability of the elastic wheel 1. Since the protecting member 8 is provided, a freedom degree of material selection of the damper member 5 is increased and the productivity is enhanced. Further, since the protecting member 8 is made of elastic material, when the rim 3 and the disk 4 relatively move, the protecting member 8 deforms and follows the relative movement. Thus, an original performance of the elastic wheel 1 is not deteriorated. When the protecting member 8 is damaged, the protecting member 8 can easily be exchanged.

It is preferable that the protecting member 8 is made of material having heat resistance, oil resistance and/or weather resistance. For this reason, rubber or elastomer is suitable, and rubber having different composition as that of the matrix rubber of the damper member 5 is preferable.

The brake system is heated to a high temperature, the braking operation is frequently repeated especially on a winding road and thus, a brake rotor or a brake shoe is heated to several hundred degrees Celsius. According to experiments performed by the present inventors, it was found that a damper member 5 which received such heat was heated to about 100 to 150 degrees Celsius in some cases when the protecting member 8 was not provided. Therefore, the protecting member 8 has heat resistance so that its physical properties are not largely varied at not less than 100 degrees Celsius, more preferably not less than 150 degrees Celsius. For example, it is preferable that in the elastic material, a ratio (EB2/EB1) of initial (new product) breaking elongation EB1 and breaking elongation EB2 after the material ages at 160 degrees Celsius for five days is not less than 0.70. The breaking elongation is the same as "elongation after cut" in JIS K6251.

Examples of preferable elastic materials having the heat resistance above are butyl-based rubber such as butyl rubber and butyl rubber halide, ethylene propylene rubber, ethylene propylene diene rubber, fluorine rubber, silicone rubber, diene-based rubber in which hydrogen is added, chlorinated polyethylene, copolymer of brominated paramethyl styrene and isobutylene. They can be used by compounding one of them, or if possible not less than two of them. As described above, even if a rubber having low heat resistance is used, if nano composite which is a nano scale filler is added by not less than 3 parts by mass, more preferably not less than 5 parts by mass to rubber polymer 100 parts by mass, the heat resistance can easily be enhanced. A large amount of antioxidant, more concretely, not less than 1 part by mass, more preferably not less than 3 parts by mass, more preferably not less than 5 parts by mass may be added to the rubber polymer 100 parts by mass to improve the heat resistance of the protecting member 8.

An oil resistance of the protecting member 8 is not limited only if the protecting member 8 can endure relatively mild grease. Preferable examples of such elastic materials are the above-described rubber and elastomer,
acrylonitrile-butadiene hydride rubber, EPDM, chloroprene or chlorosulfonic polyethylene rubber.

As the protecting member 8, it is possible to preferably use dynamically cross-linked rubber, dynamically cross-linked polyolefin, polyurethane, styrene-butadiene copolymer, styrene-isoprene copolymer, styrene-isobutylene copolymer, and thermoplastic elastomer such as compound hydride of any of the above copolymers. The thermoplastic elastomer can be machined using a normal plastic molding machine and does not require cure (cross link). Thus, the productivity of the protecting member 8 can be enhanced.

As shown in Fig. 2, a thickness t of the protecting member 8 is not especially limited, but if the thickness t is excessively small, external injury may easily be generated in the damper member 5 through the protecting member 8. In view of such fact, the thickness t of the protecting member 8 is preferably not less than 0.1 mm, more preferably not less than 0. 5 mm, and more preferably not less than 1 mm. The upper limit of the thickness t is not especially limited, but if it is excessively large, the weight of the wheel is increased and thus, it is preferable that the thickness t is not more than 10 mm and more preferably not more than 5 mm.

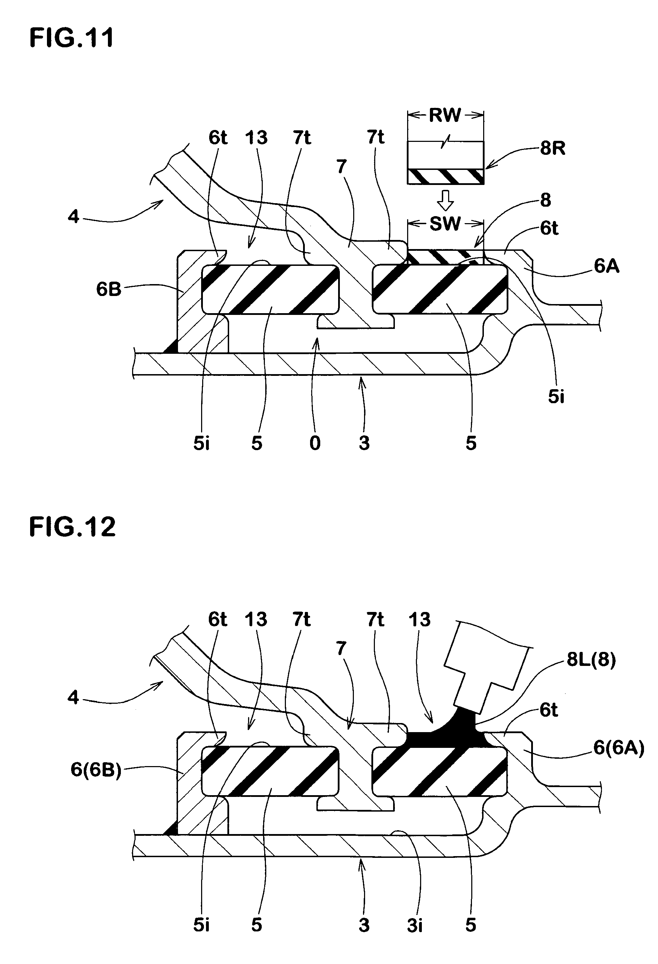

The protecting member 8 can be provided on the elastic wheel 1 by various methods. As one embodiment, as shown in Fig. 11, the protecting member 8 is previously cured or hardened as an annular ring body 8R, and this is disposed such as to cover the radially inner peripheral surface 5i of the damper member 5. Especially in the elastic wheel 1 of the present embodiment, the groove wall-like projections 6t and 7t are formed on both sides of the inner peripheral surface 5i of the damper member 5 in the axial direction. Therefore, positioning function and retaining function of the ring body 8R can be obtained.

It is preferable that the ring body 8R has an outer peripheral circumferential length which is equal to or slightly greater than a circumferential peripheral length of the inner peripheral surface 5i of the damper member 5. With this, the ring body 8R can strongly come into intimate contact with the inner peripheral surface 5i of the damper member 5. Since a centrifugal force when the vehicle runs acts in a direction in which the ring body 8R (protecting member 8) comes into intimate contact with the inner peripheral surface 5i of the damper member 5, the ring body 8R is effectively prevented from falling out during running. For the same reason, it is preferable that the width RW of the ring body 8R in the axial direction is substantially equal to or slightly greater than the width SW of the recess 13, and the ring body 8R is attached in a fastening fitting state. With this, the protecting member 8 is disposed so as to connect between the first ring piece 6 and the disk 7.

As another embodiment, as shown in Fig. 12, the protecting member 8 can be formed in such a manner that fluidized (including both liquid state and gel state) rubber or elastomer material 8L is poured into the recess 13 formed by the inner peripheral surface 5i of the damper member 5 and the projections 6t and 7t on both sides in its axial direction, and this is hardened. That is, the protecting member 8 is formed by hardening the fluid state rubber or thermoplastic elastomer at a predetermined position. According to this method, molding and fixing of the protecting member 8 can be realized at the same time, and the productivity is enhanced. A gap between the protecting member 8 and the damper member 5 can be reduced and preferably the gap can be eliminated and thus, the protecting effect of the damper member 5 is enhanced more reliably.

In order to bring material of fluidized rubber into contact with the damper member 5 more intimately, the rubber or elastomer material 8L may be poured and then, the elastic wheel 1 may be rotated around the center axis thereof in a state where the material is not yet hardened. With this, the fluidized rubber material 8L can come into intimate contact with the radially inner surface 5i of the damper member 5 and integrally be hardened.

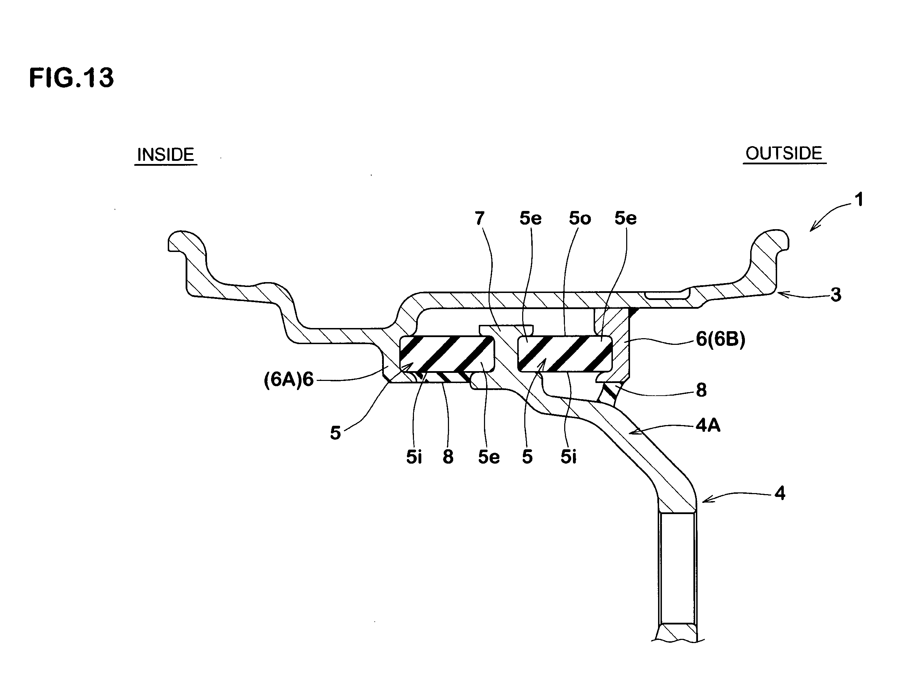

In an embodiment shown in Fig. 13, one of the protecting members 8 is provided to cover the damper member 5 such that the protecting member 8 is separated from the inner peripheral surface 5i thereof. In this embodiment, the protecting member 8 is astride the first ring piece 6 and the disk 4. More concretely, the protecting member 8 closes a space between the post-fixed ring piece 6B and a shoulder 4A of the disk 4 which approaches the post-fixed ring piece 6B radially inward. With this, since the damper member 5 is not exposed outside, it is possible to prevent a foreign matter from outside of the vehicle from coming into direct contact with the damper member 5. The damper member 5 provided inside of the vehicle is identical to the previous embodiment.

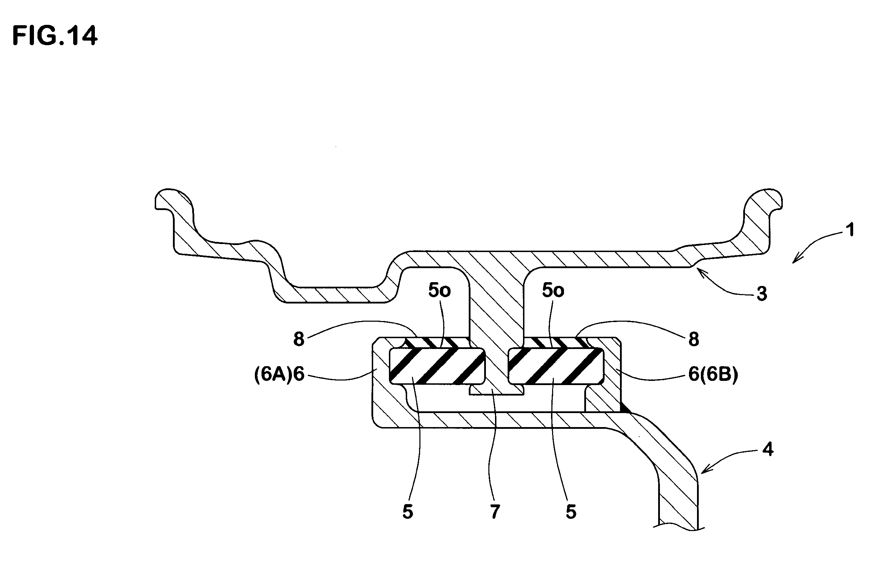

In an embodiment shown in Fig. 14, in the elastic wheel 1, the disk 4 is provided with a pair of first ring pieces 6 and the rim 3 is provided with a second ring piece 7. In this embodiment, since the radially outer peripheral surface 5o of the damper member 5 is exposed outside, the protecting member 8 is provided on the radially outer peripheral surface 5o side of the damper member 5. In this manner, a portion of the damper member 5 exposed outside can be covered in the intimate contact state or in the separated state.

In an embodiment shown in Fig. 15, the protecting member 8 is integrally adhered to an outer surface 5Ao of the damper member 5, and the protecting member 8 covers at least 50% of the outer surface. The adhering method between the protecting member 8 and the damper member 5 is not especially limited, but they may be adhered by curing adhesion or using adhesive agent, and the above described various adhering methods can be employed.

In the case of the present embodiment, in order to protect the damper member 5 more reliably, it is preferable that the protecting member 8 covers not less than 50% of the outer surface 5Ao of the damper member 5, more preferably not less than 70%, and more preferably not less than 80%, and more preferably not less than 90%, and most preferably not less than 100% as shown in Fig. 15. In this embodiment, it is preferable that the thickness t of the protecting member 8 is not less than 0.1 mm and not more than 2.5 mm.

Since a large number of organic fiber cords c are embedded in each damper member 5, the electrical resistance value of the damper member 5 is high, and there is a tendency that the rim 3 and the disk 4 is insulated from each other. If the elastic wheel 1 is electrically non-conductive, static electricity generated on a side of the vehicle is accumulated in the vehicle and radio noise or the like is prone to be generated. In view of such circumstances, it is preferable that the protecting member 8 is made of conductive material having volume specific resistance of not more than 1 x 10⁸ (Ω·cm).

A rubber material or the like which can exhibit conductive property can be realized by compounding a necessary amount of conductive material into rubber or elastomer. Examples of the conductive materials are carbon black, metal oxide, carbon nano tube, metal thin wire and/or metal powder and the like. When carbon black is compounded, it is preferable that an amount thereof is not less than 40 parts by mass with respect to 100 parts by mass rubber polymer, and more preferably not less than 50 parts by mass. If the amount of carbon black to be compounded is excessively high, there is a tendency that the rubber becomes hard and thus, it is preferable that the amount is not more than 70 parts by mass.

If the conductive protecting member 8 is disposed such that it comes into contact with both the rim 3 and disk 4, the electric resistance value (electric resistance value between the rim 3 and the disk 4) of the wheel itself can be reduced to not more than 10⁸ (Ω), more preferably not more than 10⁷ (Ω).

Although especially preferable embodiments of the present invention have been described in detail, the present invention is not limited to the embodiments and can be modified into various modes.

### Comparative Test

Elastic wheels (size: 18x8.0-JJ) were prototyped, an actual vehicle run and damage states of a damper member were checked.

### Example 1:

Liquid silicon rubber (KE-1800 produced by Shin-Etsu Chemical Co., Ltd.) was poured into the entire region of a radially inner peripheral surface of a damper member of an elastic wheel, the rubber was heated and cured, thereby forming a protecting member which was in intimate contact with the radially inner peripheral surface of the damper member and which had a thickness of about 3 mm as shown in Figs. 1 and 2. A tire was assembled to the elastic wheel, and the tire was allowed to run on a drum tester for 20,000 km at a speed of 80 km/h. After running, the protecting member was checked, the protecting member was tightly fitted into the damper member, and did not fall out. Next, a vehicle having the elastic wheels was allowed to run on a non-paved bad road for 50 km and the protecting member was observed. With this, although small flaws were found on the surface of the protecting member but it did not fall out. Further, the protecting member was peeled off and the damper member was observed. As a result, the damper member was not damaged at all, and no oil adhered.

### Example 2:

The following addition agents (unit: PHR) were compounded into elastic elastomer (EXXPRO 90-10 produced by Exxon Mobil Corp.) 100 parts by mass in accordance with a normal method, the compounded material was mixed by a mixer and it was formed into a ring-shape.
ISAF 50
zinc oxide 5
stearic acid 1
paraffin oil 5
200 mesh sulfur 0.5
accelerator 1

This was fitted between the first ring piece and the second ring piece so that this came into intimate contact with the inner peripheral surface of the damper member, and a protecting member having a thickness of about 3 mm was formed. An adhesive was not used. Then, similar to the Example 1, a tire was assembled to the elastic wheel, and the tire was allowed to run for 20,000 km at a speed of 80 km/h on the drum tester, and the protecting member was tightly fitted into the damper member. Then, a vehicle with the elastic wheels was allowed to run on a non-paved bad road for 50 km. With this, although small flaws were found on the surface but it did not fall out. The protecting member was peeled off and the damper member was observed. As a result, the damper member was not damaged at all, and no oil adhered. Further, thermo-labels were pasted between the damper member and the protecting member and on a surface (inner surface) of the protecting member, and the vehicle was allowed to run on a downhill winding road for 0.5 hours. As a result, the temperature of the surface of the protecting member was increased to 150 degrees Celsius, but the temperature between the protecting member and the damper member was about 110 degrees Celsius. Therefore, it could be confirmed that thermal insulation could be obtained by the protecting member.

### Example 3:

A ring body for a damper member was cured and formed using chloroprene rubber. Similar to the Example 2, this ring body was fitted between the first ring piece and the second ring piece such that the ring body comes into intimate contact with the radially inner peripheral surface of the damper member, and a protecting member having a thickness of about 3 mm was formed. The same running test as that described above was carried out and quite the same result was obtained.

### Example 4:

Using acrylonitrile-butadiene hydride rubber, a ring body for a damper member was cured and formed. Like the Example 2, this ring body was fitted between the first ring piece and the second ring piece such that the ring body comes into intimate contact with the radially inner peripheral surface of the damper member, and a protecting member having a thickness of about 3 mm was formed. The same running test as that described above was carried out and quite the same result was obtained.

### Example 5:

The following addition agents (unit: PHR) were compounded into hydrogen-added acrylonitrile butadiene rubber (2020 produced by Nippon Zeon Corp.), the compounded material was mixed by a mixer, and a rubber sheet having a thickness of 1 mm was molded by extrusion.
ISAF 60
zinc oxide 5
stearic acid 1
di-cumyl peroxide 3.2
antioxidant 6
wax 1.5
tackifier 4
DOP 20

The rubber sheet was pasted on the entire region of an outer surface of a previously prepared ring damper member, it was cured by a mold, and a protecting member was integrally cured and adhered to the damper member. The specification thereof is as follows:
Damper without a protecting member
   rubber compounding ratio (NR: SBR: BR: H-NBR = 40 : 30: 20 : 10)
   reinforcing cord material: nylon
   cord density: 50.4/50 mm
Damper member covered with protecting member
(laterally long rectangular cross section)
   width: 38 mm
   thickness: 13 mm
   chamfer of corner: R = 2 mm
   outer diameter: about 423 mm
   inner diameter: about 397 mm

Next, the damper member attached such that it was laterally compressed between the rim and the disk and the elastic wheel was obtained. The damper member and the rim or the disk were not adhered. The elastic wheel was assembled to the tire, the internal pressure was set to 2.4 kPa, a load was set to 4 kN, and the tire was allowed to run on the drum tester at a speed of 80 km/h. After running, the protecting member was visually checked, and no flaw was found.

Further, a vehicle having the elastic wheels was allowed to run on a non-paved bad road for about 50 km and the protecting member was visually observed. With this, although small flaws were found on the surface but it was not peeled off out. The protecting member was peeled off and the body was observed. As a result, the damper member was not damaged at all, and no oil adhered.

Further, the elastic wheel was left for about one month outside in the summer, but no crack or flaw was generated in the surface of the protecting member.

A volume specific resistance value of the protecting member was 2 x 10⁶ (Ω·cm), and an electric resistance value (resistance value between the rim and the disk and impressed voltage 500V, temperature 25°C and moisture 50%) of the elastic wheel to which the protecting member was assembled was measured and the electric resistance value was not more than 1 x 10⁶ (Q), and it was confirmed that excellent conductive property was obtained.

### Example 6:

The following addition agents (unit: PHR) were compounded into elastic elastomer (EXXPRO 90-10 produced by Exxon Mobil Corp.) 100 parts by mass, the compounded material was mixed by a mixer, a rubber sheet having a thickness of 1 mm was molded by extrusion, and it was pasted on the damper member like the Example 5 and cured. The specification and the like of the damper member are the same as those of the Example 5.
ISAF 50
zinc oxide 5
stearic acid 1
paraffin oil 5
tackifier 10
200 mesh sulfur 0.5
accelerator 1

Next, the damper member is assembled between the rim and the disk (Fig. 1), the wheel with a tire was allowed to run on the drum tester for 20,000 km at a speed of 80 km/h similar to the Example 5, and no flaw was found in the protecting member. After the test, a vehicle with the wheels was allowed to run on a non-paved bad road for about 50 km. With this, although small flaws were found on the surface but no flow reaches the damper member. The protecting member was peeled off and the damper member was observed. As a result, the damper member was not damaged at all, and no oil adhered.

### Example 7:

In this example, 1 mm thickness chloroprene rubber having the following composition is used as the protecting member, the damper member was covered with the protecting member, and the same test as the Examples 5 and 6 was carried out, and the same great result was obtained.
chloroprene rubber (WRT) 100.0
magnesium oxide 4.0
zinc oxide 5.0
stearic acid 1.0
accelerator 22 1.0
GPF 50.0
DOP 8.0

### Reference:

Similar to the Example 2, the drum test and the high speed winding running test were carried out using an elastic wheel in which a damper member is not provided with a protecting member. As a result, many flaws were generated in the damper member, and reinforcing fiber cords were exposed from a portion of the damper member. Grease adhered to the surface of the damper member and swelling was generated. When the surface temperature of the damper member was measured immediately after running, the surface temperature was heated to about 150 degrees Celsius. Further, after leaving the elastic wheel for 30 days outside in the summer, many cracks were generated in the surface of the damper member. It was found that a volume specific resistance of the elastic wheel was greater than 1 × 10⁸ (Ω·cm), and the elastic wheel was substantially non-conductive.

## Claims

1. An elastic wheel comprising
a circumferentially extending rim for supporting a tire,
a disk fixed to an axle,
a damper member disposed between the rim and the disk and made of elastic material for absorbing vibration, and
a protecting member made of elastic material and covering the damper member.

2. The elastic wheel according to claim 1, wherein
one of the rim and the disk includes a pair of first ring pieces which are separated in an axle direction, the first ring pieces project in a radial direction and extend in a circumferential direction, and
the other one of the rim and the disk includes a second ring piece which projects in the radial direction and extends in the circumferential direction between the first ring pieces, and
a pair of said dampers which are fixed between the first ring piece and the second ring piece on both sides of the second ring piece.

3. The elastic wheel according to claim 2, wherein
the first ring pieces are provided on an inner peripheral surface of the rim, and the second ring piece is provided on an outer periphery of the disk, and
the protecting member is disposed so as to connect between the first ring piece and the disk in contact with an inner peripheral surface of the damper member so that the inner peripheral surface of the damper member does not expose.

4. The elastic wheel according to claim 2, wherein
the first ring pieces are provided on an inner peripheral surface of the rim, and the second ring piece is provided on an outer periphery of the disk, and
the protecting member is disposed so as to connect between the first ring piece and the disk without contacting an inner peripheral surface of the damper member so that the inner peripheral surface of the damper member does not expose.

5. The elastic wheel according to claim 2, wherein
the first ring pieces are provided on an outer periphery of the disk, and the second ring piece is provided on an inner peripheral surface of the rim, and
the protecting member is disposed so as to connect between the first ring piece and the second ring piece in contact with an outer peripheral surface of the damper member so that the outer peripheral surface of the damper member does not expose.

6. The elastic wheel according to any one of claims 1 to 5, wherein
the damper member is made of fiber-reinforced rubber.

7. The elastic wheel according to claim 6, wherein
the fiber includes long fiber having a length exceeding one round of the damper member, and
a total mass of the long fiber is not less than 50% of the entire fiber mass.

8. The elastic wheel according to any one of claims 1 to 6, wherein
the protecting member is obtained by hardening fluidized rubber or thermoplastic elastomer disposed at a predetermined position.

9. The elastic wheel according to claim 6, wherein
the protecting member is integrally adhered to an outer surface of the damper member.

10. The elastic wheel according to claim 6, wherein
the protecting member is integrally adhered to an outer surface of the damper member and covers at least 50% of the damper member.

11. The elastic wheel according to claim 6, wherein
the protecting member is integrally adhered to an outer surface of the damper member and covers the entire region of the damper member.

12. The elastic wheel according to claim 9, 10 or 11, wherein
the protecting member is made of rubber or elastomer which is different from matrix rubber of fiber-reinforced rubber.

13. The elastic wheel according to any one of claims 1 to 12, wherein
the protecting member includes at least one of butyl rubber, butyl rubber halide, diene-based rubber in which hydrogen is added, diene-based rubber in which no hydrogen is added, ethylene propylene rubber, ethylene propylene diene rubber, chloroprene rubber, chlorosulfonic polyethylene rubber, fluorine rubber, acrylic rubber, silicone rubber, chlorinated polyethylene, and copolymer of brominated paramethyl styrene and isobutylene.

14. The elastic wheel according to any one of claims 1 to 12, wherein
the protecting member is dynamically cross-linked rubber, dynamically cross-linked polyolefin, polyurethane, styrene-butadiene copolymer, styrene-isoprene copolymer, styrene-isobutylene copolymer, or compound hydride of any of the above copolymers.

15. The elastic wheel according to any one of claims 1 to 14, wherein
the protecting member has conductivity having volume specific resistance of not more than 1 x 10⁸ (Ω·cm), and is in contact with both the rim and the disk.

16. The elastic wheel according to claim 9, 10 or 11, wherein
the protecting member has a thickness in a rang of from 0.1 to 5.0 mm.

17. The elastic wheel according to any one of claims 1 to 16, wherein
the protecting member has heat resistance in which a ratio (EB2/EB1) of initial breaking elongation EB1 and breaking elongation EB2 after the protecting member ages at 160 degrees Celsius for five days is not less than 0.70.
